# EUROPÄISCHE PATENTANMELDUNG

(11) **EP 0 658 776 A1**
(43) Veröffentlichungstag der Anmeldung: **21.06.1995**
(21) Anmeldenummer: 94119025.8
(22) Anmeldetag: 02.12.1994
(51) Int. Cl.: G01S 17/88

(54) **Laserstrahleinrichtung für Kraftfahrzeuge**

(30) Priorität: 17.12.1993 DE 4343092
(71) Anmelder: Bayerische Motoren Werke Aktiengesellschaft, 80809 München (DE)
(72) Erfinder: Naab, Karl, Dr., D-85457 Wörth (DE); Hahn, Wolfgang, D-85247 Schwabhausen (DE)

(57) **Zusammenfassung**

Bei einer Laserstrahleinrichtung für Kraftfahrzeuge, mit mindestens einem Sender, mindestens einem Empfänger und mit einer Auflösungsoptik für Laserstrahlen, über die ein vor dem Kraftfahrzeug liegender Bereich in mehrere Untersuchungsbereiche aufgeteilt abtastbar ist, schließen sich an einen zentralen Bereich beidseitig Randbereiche an, deren Untersuchungsbereiche sich mit dem des zentralen Bereichs überlappen.

## Beschreibung

Die Erfindung bezieht sich auf eine Laserstrahleinrichtung nach Anspruch 1.

Bei bekannten Einrichtungen dieser Art schließen benachbarte Untersuchungsbereiche nahtlos aneinander an (DE 37 01 340 A1) oder besitzen Austastlücken (DE 40 28 788 A1), d.h. die Untersuchungsbereiche stehen auf Lücke und besitzen dazwischenliegende nicht erkennbare Bereiche.

Um einen relativ großen azimutalen Auflösungsbereich zu erhalten, ist es bei den bekannten Einrichtungen erforderlich, eine Vielzahl von Kanälen vorzusehen (DE 37 01 340 A1) bzw. es ergeben sich bedingt durch die Austastlücken Probleme bei der Erkennung schmaler Objekte (DE 40 28 788 A1).

Der Erfindung liegt die Aufgabe zugrunde, eine Laserstrahleinrichtung der eingangs genannten Art zu schaffen, die mit geringem konstruktiven Aufwand ein hohes Auflösungsvermögen erreicht.

Die Erfindung löst diese Aufgabe durch die kennzeichnenden Merkmale des Patentanspruchs 1.

Besitzen der zentrale Bereich und die beiden Randbereiche beispielsweise jeweils ein Gesichtsfeld von 3° und überlappen sie sich jeweils zu einem Drittel, ergibt sich eine Winkelauflösung von 2 * 2° für die Randbereiche und 3 * 1° für den zentralen Bereich bei einem Gesamtgesichtfeld von 7°. Diese Geometrieverhältnisse lassen sich bei einer separaten Anordnung von Untersuchungsbereichen, wie sie bei der erstgenannten Druckschrift beschrieben wird, nur mit fünf Bereiche und damit in einer zugehörigen Auswerteschaltung mit fünf Kanälen erreichen. Der gegenüber der zweitgenannten Druckschrift erreichte Vorteil, Austastlücken zu vermeiden, macht sich gerade bei den Hindernissen bemerkbar, die sich in der Nähe des Zentralbereichs, d.h. bei einer Geradeausfahrt des Kraftfahrzeugs gerade im Bereich des Fahrkorridors befinden.

In weiterer Ausgestaltung des Grundgedankens der Erfindung läßt sich das Gesichtsfeld lückenlos und mit einem guten azimutalen Auflösungsvermögen dann vergrößern, wenn die Strahlgeometrie entsprechend den Merkmalen des Patentanspruchs 2 gewählt ist. Bei einer Bewegung eines Objekts über die einzelnen Kanäle hinweg ergibt sich die Möglichkeit, diese Bewegung exakt zu verfolgen und mit hoher Präzision den voraussichtlichen Verlauf der Bewegungsbahn vorherzusagen. Eine derartige Bewegung findet beispielsweise dann statt, wenn ein Objekt aufgrund der Bewegung des Kraftfahrzeugs verschiedene Untersuchungsbereiche durchläuft. Durch Referenz mit der Eigenbewegung des Kraftfahrzeugs läßt sich die Eigenbewegung des Objekts bestimmen und eine sich anbahnende gefährliche Situation durch entsprechende Gegenmaßnahmen verhindern oder zumindest in ihrer Gefährlichkeit verringern. Derartige Gegenmaßnahmen können sowohl aktiv, d.h. beispielsweise durch eine automatische Reduktion des Antriebsmoments der Brennkraftmaschine oder das Einleiten eines Bremsvorgangs oder aber auch passiv, durch akustischen oder optischen Hinweis auf die bevorstehende Gefahr, erfolgen.

Der Grundgedanke der Erfindung, d.h. eine relativ großen (feine) Auflösung durch relativ großen Raumwinkel des einzelnen Untersuchungsbereichs unter gleichzeitiger Überlappung benachbarter Untersuchungsbereiche zu erreichen, kann auch eingesetzt werden, um den Untersuchungsbereich insgesamt groß zu gestalten. Hierzu sind im Patentanspruch 3 Merkmale angegeben, die darauf hinauslaufen, im Außenbereich den Raumwinkel größer als für die Untersuchungsbereiche im Zentrum bzw. im Randbereich zu halten. Da mit geringem Aufwand die Bewegung eines Objekts im Bezug auf das Kraftfahrzeug erfaßt werden kann, wie oben angegeben, kann auch bei einem entsprechend großem Raumwinkel für den Außenbereich die Gefährlichkeit eines Objekts erkannt werden. Tritt dieses beispielsweise nicht in den benachbarten Randbereich ein, so besteht voraussichtlich keine Kollisionsgefahr.

Die Berücksichtigung des Außenbereichs ist insbesondere dann vorteilhaft, wenn die Geschwindigkeit des Kraftfahrzeugs relativ gering, beispielsweise 30 km/h ist. Nur für derart geringe Geschwindigkeiten besitzt der Außenbereich Bedeutung, während er bei hohen Geschwindigkeiten, beispielsweise 100 km/h vernachlässigt werden kann. Dies gilt auch oder gerade dann, wenn der Außenbereich einen Raumwinkel besitzt, der wesentlich größer als der Raumwinkel des zentralen Bereichs bzw. der beiden Randbereiche ist. Als Wert für diesen Raumwinkel kann 6° sinnvoll und im Bezug auf das angegebene Beispiel von Vorteil sein. Die Energie, die in den Außenbereich eingestrahlt wird, kann gleich der Energie gewählt sein, die in den Zentralbereich gelangt. Damit ist die auf die Raumwinkeleinheit entfallende Energie geringer. Bedingt durch die kleinere Entfernung der interessierenden Objekte - Objekte in großer Entfernung außerhalb des Zentralbereichs können unberücksichtigt bleiben - bleibt die empfangene rückgestreute Energie annähernd gleich der von weiter entfernten Objekten im Zentralbereich.

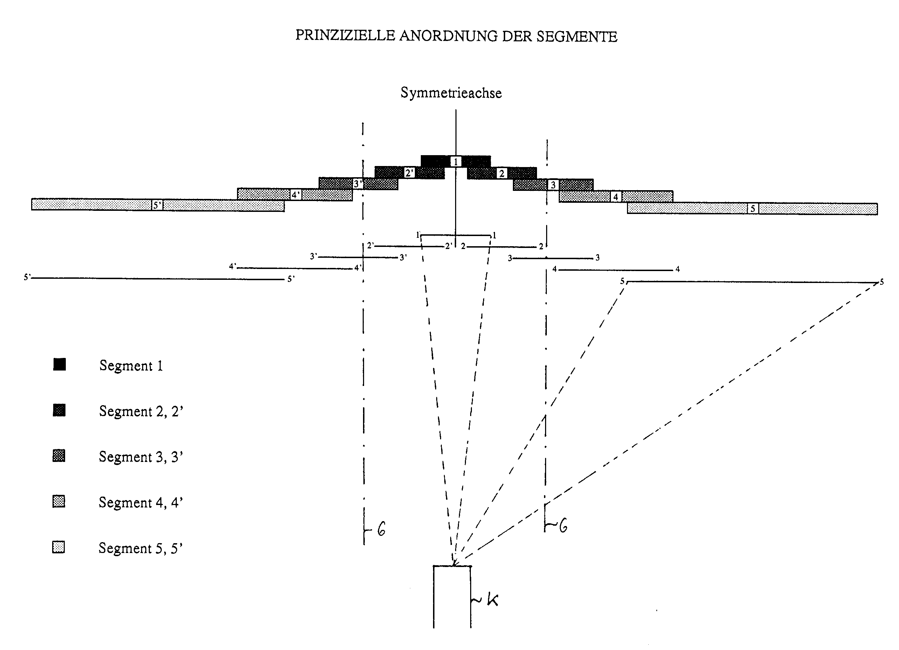

Anhand der Zeichnung ist die Erfindung weiter erläutert.

In der einzigen Figur ist die Erfindung im Prinzip dargestellt. Mit Hilfe einer nicht dargestellten Auflösungsoptik wird das Vorfeld eines Kraftfahrzeugs K in verschiedene Untersuchungsbereiche aufgeteilt. Diese Untersuchungsbereiche werden mit Laserstrahlen einer nicht dargestellten Laserquelle bestrahlt. Ebenfalls nicht gezeigte Empfänger arbeiten in der Weise, daß sie ein im jeweiligen Untersuchungsbereich gelegenes Objekt aufgrund der reflektierten Strahlung detektieren.

Die Ausrichtung der Empfänger und der Laserstrahlen ist derart, daß die Untersuchungsbereiche sich an ihrem Rande überlappen. Es ist ein zentraler Untersuchungsbereich gebildet, dessen Begrenzung mit den Zahlen 1/1 bezeichnet und mit seiner Begrenzung gestrichelt eingezeichnet ist. Der Bereich liegt symmetrisch der Symmetrieachse. Sie liegt in der Verlängerung der jeweiligen Bahn des Kraftfahrzeugs. An den zentralen Bereich (1/1) schließen sich zwei Randbereiche an, deren Begrenzungen mit 2/2 bzw. 2'/2' bezeichnet sind. Die Raumwinkel für den zentralen Bereich und für die beiden Randbereiche sind zu jeweils 3° gewählt. Die Überlappung des zentralen Bereichs mit den beiden Randbereichen soll jeweils ein Drittel, d.h. einen Raumwinkel von 1° betragen.

An die beiden Randbereiche schließen sich zwei äußere Bereiche an, die mit 3/3 bzw. 3'/3' bezeichnet sind. Der Raumwinkel dieser Bereiche ist zu 6° gewählt. Auch hier soll sich eine Überlappung zwischen den beiden benachbarten Bereichen 2'/2 und 3'/3 bzw. 2/2' und 3/3' von jeweils 1° ergeben. Ein noch weiter außen gelegener Bereich 4/4 bzw. 4'/4' sowie ein extremer Bereich 5/5 (strichliert) bzw. 5'/5' mit öffnungswinkel von 12 bzw. 24° mit einer Überlappung von 2° bzw. 3° ergibt einen Gesamt-Untersuchungsbereich mit einem öffnungswinkel von etwa 80°. Dabei ist der öffnungswinkel umso größer, je weiter der jeweilige Untersuchungsbereich von der Mittelachse 0 entfernt ist.

Die verschiedenen Bereiche sind mit ihren Abmessungen quer zur Symmetrieachse in einer beispielhaft angenommener Entfernung von 50 m als Linie (z.B. 3'-3') und als Balkensegment (entsprechend Segment 3') dargestellt. Der Übersichtlichkeit halber sind die sich untereinander überlappenden Darstellungen hintereinander gezeigt. Strichpunktierte Linien 6 zeigen den Fahrkorridor des Fahrzeugs. Nur darin befindliche Objekte -in ihrer Position durch die Laufzeit des reflektierten Lichts zu erkennen- gelten als kritisch.

Die Bewegung eines Objekts in Bezug auf die Untersuchungsbereiche läßt sich lückenlos verfolgen. Dabei kann der Übergang von einem Untersuchungsbereich zum anderen nicht nur durch den Wechsel des Untersuchungsbereichs, sondern auch durch die Existenz im Überlappungsbereich der beiden benachbarten Untersuchungsbereiche problemlos erfaßt werden. Das Auflösungsvermögen ist trotz der relativ großen Breite der einzelnen Untersuchungsbereich relativ groß, da beispielsweise der Bereich um die Mittelachse ein Auflösungsvermögen von 3 * 1° besitzt. Daran anschließt sich für den Untersuchungsbereich 2/2 bzw. 2'/2' beim Übergang vom vorhergehenden zum weiter außen liegenden Untersuchungsbereich ein Auflösungsvermögen von 1, 3 und 2° an. Ein Objekt ist in seiner Bewegung relativ zum Kraftfahrzeug lückenlos erfaßbar. Eine Kollisionsgefahr ist ebenso wie die tatsächliche Größe des Objekts ohne weiteres zu detektieren. Dadurch ergibt sich ein hohes Maß an Sicherheit.

Die Ausleuchtung der Untersuchungsbereiche kann starr, d.h. mit entsprechender Anzahl von Sendern und Empfängern erfolgen. Alternativ ist es auch möglich, den Gesamt-Untersuchungsberelch mit einer Sender-Empfangseinrichtung zu rastern Die Anordnung der einzelnen Untersuchungsbereiche ergibt sich durch eine geeignete Zeitsteuerung. Bei einem angenommenen minimalen öffnungswinkel von z.B. 3° werden bei zentraler Ausrichtung (zentraler Untersuchungsbereich) und bei einer relativen Auslenkung um +/-2° die beiden Randbereiche untersucht. Entsprechendes gilt für die übrigen Bereiche, wobei die Strahlaufweitung mit geeigneten optischen Mitteln vorgenommen wird.

## Patentansprüche

1. Laserstrahleinrichtung für Kraftfahrzeuge, mit mindestens einem Sender, mindestens einem Empfänger und mit einer Auflösungsoptik für Laserstrahlen, über die ein vor dem Kraftfahrzeug liegender Bereich in mehrere Untersuchungsbereiche aufgeteilt abtastbar ist, dadurch gekennzeichnet, daß sich an einen zentralen Bereich beidseitig Randbereiche anschließen, deren Untersuchungsbereiche sich mit dem des zentralen Bereichs überlappen.

2. Laserstrahleinrichtung nach Anspruch 1, dadurch gekennzeichnet, daß sich an die Randbereiche Außenbereiche anschließen, deren Untersuchungsbereiche sich mit dem des jeweiligen Randbereichs, jedoch nicht mit dem des zentralen Bereichs überlappen.

3. Laserstrahleinrichtung nach Anspruch 2, dadurch gekennzeichnet, daß das Gesichtsfeld des Außenbereichs größer als das des Randbereichs ist.

4. Laserstrahleinrichtung nach Anspruch 2 oder 3, dadurch gekennzeichnet, daß die Außenbereiche vorzugsweise bei niedrigen Geschwindigkeiten des Kraftfahrzeugs aktiviert sind.
